(19) **Europäisches Patentamt / European Patent Office / Office européen des brevets**

(11) **EP 2 201 407 B1**

(12) **FASCICULE DE BREVET EUROPEEN**

(45) Date de publication et mention de la délivrance du brevet:
**27.04.2011 Bulletin 2011/17**

(21) Numéro de dépôt: **08843228.1**

(22) Date de dépôt: **20.10.2008**

(51) Int Cl.:
**G01T 1/169** (2006.01)

(86) Numéro de dépôt international:
**PCT/EP2008/064093**

(87) Numéro de publication internationale:
**WO 2009/053324 (30.04.2009 Gazette 2009/18)**

(54) **PROCEDE DE DETERMINATION DE DOSE DE RAYONNEMENT ET PROCEDE DE DETERMINATION DE COURBE ISODOSE ASSOCIE**

VERFAHREN ZUR BESTIMMUNG EINER STRAHLUNGSDOSIS UND VERFAHREN ZUR BESTIMMUNG EINER ENTSPRECHENDEN ISOLINIEN-KURVE

METHOD OF DETERMINING A RADIATION DOSE AND METHOD OF DETERMINING AN ASSOCIATED ISODOSE CURVE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.10.2007 FR 0758465**

(43) Date de publication de la demande:
**30.06.2010 Bulletin 2010/26**

(73) Titulaire: **Commissariat à l'Énergie Atomique et aux Énergies Alternatives 75015 Paris (FR)**

(72) Inventeurs:
- **MASSE, Véronique F-78960 Voisins Le Bretonneux (FR)**
- **CHIRON, Maurice F-77860 Quincy-voisins (FR)**

(74) Mandataire: **Ilgart, Jean-Christophe et al BREVALEX 95 rue d'Amsterdam 75378 Paris Cedex 8 (FR)**

(56) Documents cités:

- **DATABASE INSPEC [Online] THE INSTITUTION OF ELECTRICAL ENGINEERS, STEVENAGE, GB; 2004, YOON HYUK KIM ET AL: "Use of simulation technology for prediction of radiation dose in nuclear power plant" XP002491056 Database accession no. 8393737 & COMPUTATIONAL AND INFORMATION SCIENCE. FIRST INTERNATIONAL SYMPOSIUM, CIS 2004. PROCEEDINGS 16-18 DEC. 2004 SHANGHAI, CHINA, 18 janvier 2005 (2005-01-18), pages 413-418, Computational and Information Science. First International Symposium, CIS 2004. Proceedings (Lecture Notes in Computer Science Vol.3314) Springer-Verlag Berlin, Germany ISBN: 3-540-24127-2**
- **SEPHTON ET AL: "Dose mapping of a <60>Co industrial irradiation plant using an electronic data recording system, static measurements and mathematical modelling" RADIATION PHYSICS AND CHEMISTRY, ELSEVIER SCIENCE PUBLISHERS BV., AMSTERDAM, NL, vol. 76, no. 11-12, 19 septembre 2007 (2007-09-19), pages 1820-1825, XP022249602 ISSN: 0969-806X**
- **DATABASE COMPENDEX [Online] ENGINEERING INFORMATION, INC., NEW YORK, NY, US; 1 janvier 2003 (2003-01-01), ORLOV V YU ET AL: "Monte Carlo calculation of gamma dose distribution inside a building wall (BW) and in air" XP002491057 Database accession no. E2003407655070 & ATOMNAYA ENERG.; ATOMNAYA ENERGIYA 2003, vol. 94, no. 6, 2003, pages 479-483,**

EP 2 201 407 B1

**Description**

**DOMAINE TECHNIQUE ET ART ANTERIEUR**

L'invention concerne un procédé de détermination de dose de rayonnement ainsi qu'un procédé de détermination de courbe isodose à partir de doses déterminées par le procédé de l'invention.

Les courbes isodoses sont, pour un rayonnement donné, des lignes ou des surfaces fictives au niveau desquelles une dose de rayonnement est sensiblement constante. Dans la suite de la description, le terme « rayonnement » sera compris comme un rayonnement gamma, une émission de neutrons ou une émission de particules alpha.

On connaît la publication intitulée "Use of simulation technology for prediction of radiation dose in nuclear power plant" (Institution of Electrical Engineers, Stevenage, BG, 2004). Ce document décrit un procédé de détermination de dose de rayonnements émis par une source de matière fissile dans une installation.

Ce procédé nécessite, implicitement, une étape de détermination du nombre de fissions qui se produisent, en fonction du temps, dans la matière fissile ainsi qu'une étape de détermination des coefficients d'atténuation des "matériaux écran" de l'installation.

Les installations qui contiennent de la matière fissile présentent un risque d'accident de criticité malgré toutes les dispositions mises en oeuvre pour limiter ce risque. Les conséquences d'un accident de criticité sont, entre autres, le risque d'une exposition externe importante à des rayonnements émis et le risque d'une exposition interne par dispersion de produits radioactifs dans l'installation et/ou dans l'environnement. L'invention s'applique à la gestion du risque d'exposition externe.

Lorsqu'un accident de criticité survient dans une installation, il est important, pour des raisons de sécurité, de déterminer comment se répartissent les rayonnements nocifs qui résultent de l'accident. Selon l'art connu, les doses de rayonnement sont calculées manuellement, à l'aide d'abaques. Ces calculs à l'aide d'abaques sont effectués dans des plans horizontaux de l'installation. Si les calculs dans le plan de la source (plan horizontal de l'installation qui contient la source émettrice des rayonnements nocifs) conduisent à une bonne description de la répartition des doses de rayonnement, les calculs dans les plans parallèles au plan de la source conduisent à une description plus complexe de cette répartition. Par ailleurs, du fait du caractère manuel des calculs, les risques d'erreur ne sont pas négligeables et les durées de calcul peuvent être longues.

L'invention ne présente pas ces inconvénients.

**EXPOSÉ DE L'INVENTION**

En effet, l'invention concerne un procédé de détermination de dose de rayonnement émis par une source de matière fissile dans une installation comprenant les étapes suivantes :

- détermination d'un nombre de fissions qui se produisent, en fonction du temps, dans la matière fissile de la source,
- détermination de coefficients d'atténuation de matériaux qui constituent les parois verticales et les planchers de l'installation et, plus généralement, tout écran susceptible d'être placé sur la trajectoire du rayonnement émis,
- détermination, à partir de données géométriques descriptives de l'installation, entre un plan source sensiblement perpendiculaire aux parois verticales de l'installation et qui contient un point source représentatif de la source de rayonnement et un plan de visualisation parallèle au plan source, d'un ensemble de plans caractéristiques perpendiculaires au plan source et contenant, chacun, le point source et au moins une arête de jonction entre deux parois verticales de l'installation ;
- balayage angulaire des plans caractéristiques autour d'un axe perpendiculaire au plan source et passant par le point source pour définir au moins un plan de calcul ;
- détermination, pour le plan de calcul, d'un ensemble de droites caractéristiques, chaque droite caractéristique passant par le point source et par au moins un point situé à la jonction de deux arêtes de jonction ;
- sur une droite de calcul située à l'intersection du plan de visualisation et du plan de calcul, détermination de positions de points d'intersection entre la droite de calcul et les droites caractéristiques ;
- parmi les points d'intersection présents sur la droite de calcul, sélection des points d'intersection $\Delta_j$ situés dans des zones à l'air libre de l'installation ;
- calcul de la dose de rayonnement $d(\Delta_j)$ présente en chaque point $\Delta_j$, à partir du nombre de fissions en fonction du temps, d'une distance qui sépare le point source du point $\Delta_j$ et des coefficients d'atténuation des matériaux constitutifs des parois verticales et/ou des planchers et/ou de tout écran qui séparent le point source du point $\Delta_j$.

L'invention concerne également un procédé de détermination de courbe isodose d'un rayonnement émis par une source de matière fissile dans une installation, caractérisé en ce qu'il comprend successivement :

- un procédé de détermination de dose selon l'invention, et
- une comparaison des doses $d(\Delta_j)$ déterminées par le procédé de l'invention avec des intervalles de doses prédéterminés de telle sorte que .

    - si deux doses calculées $d(\Delta_j)$ et $d(\Delta_j+1)$ pour deux points d'intersection sélectionnés consécutifs $\Delta_j$ et $\Delta_j+1$ appartiennent à un même intervalle de doses, une même zone d'appartenance est affectée entre les deux points calculés ; et
    - sinon, il est recherché, par dichotomie, un ou des points $\Delta_k$ dont la dose $d(\Delta_k)$ est une limite d'intervalle de doses, une même zone d'appartenance étant affectée entre deux points consécutifs appartenant au même intervalle de doses,

- une formation de la courbe isodose le long de la droite de calcul, en fonction des zones d'appartenance affectées aux doses de rayonnement calculées.

A la conception d'une installation devant contenir de la matière fissile, une mise en oeuvre du procède de l'invention permet avantageusement d'effectuer une analyse des conséquences d'un éventuel futur accident de criticité afin de :

- définir les chemins d'évacuation de l'installation,
- déterminer des points de regroupement dans l'installation,
- positionner les sondes de détection d'accident de criticité,
- baliser les zones à risque d'exposition externe aux abords de l'installation, si celles-ci existent.

Lorsqu'un accident de criticité survient dans une installation, le procédé de l'invention permet avantageusement d'effectuer, en temps réel :

- une évaluation des risques potentiels d'exposition externe des travailleurs situés dans l'installation ou à proximité de celle-ci,
- une mise en place de moyens ou de procédures nécessaires à la gestion de la crise au niveau de l'installation en complément des actions liées au plan d'urgence,

Les procédés de l'invention sont préférentiellement mis en oeuvre par un ordinateur.

## BRÈVE DESCRIPTION DES DESSINS

D'autres caractéristiques et avantages de l'invention apparaîtront à la lecture d'un mode de réalisation préférentiel décrit en référence aux figures jointes, parmi lesquelles :

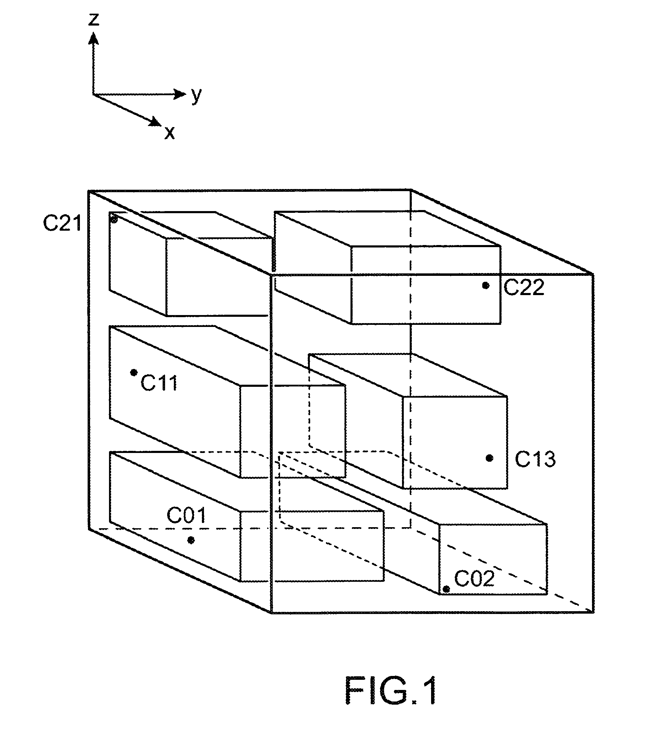

- le figure 1 représente, de façon symbolique, un exemple d'installation contenant de la matière fissile dans laquelle est susceptible de se produire un accident de criticité ;
- la figure 2 représente un synoptique du procédé de détermination de dose de l'invention ;
- la figure 3 représente un synoptique du procédé de détermination de courbe isodose de l'invention ;
- la figure 4 représente une vue en coupe d'un volume de l'installation dans lequel les doses sont calculées selon le procédé de l'invention ;
- la figure 5 représente un ensemble de plans caractéristiques utiles pour le calcul de dose selon le procédé de l'invention ;
- la figure 6 représente un ensemble de droites caractéristiques utiles pour le calcul de dose selon le procédé de l'invention ;
- la figure 7 représente un exemple de répartition de courbes isodoses obtenues, dans un plan de visualisation, selon le procédé de l'invention.

Sur toutes les figures, les mêmes repères désignent les mêmes éléments.

## EXPOSÉ DÉTAILLÉ DE MODES DE RÉALISATION PARTICULIERS

La figure 1 représente, de façon symbolique, un exemple d'installation dans laquelle est susceptible de se produire un accident de criticité.
L'installation est constituée, par exemple, d'un immeuble de plusieurs étages, chaque étage comprenant plusieurs pièces. Différents capteurs de mesure $C_{nm}$ sont répartis dans les différentes pièces de l'installation. Les capteurs $C_{nm}$ sont destinés, dans le cas d'un accident de criticité réel, à effectuer des mesures de rayonnement qui permettent d'identifier la source émettrice des rayonnements nocifs. Les capteurs $C_{nm}$ sont, par exemple, des chambres d'ionisation, des capteurs proportionnels, etc. L'installation est repérée dans un trièdre direct (x, y, z) tel que l'axe z est l'axe vertical selon lequel est définie la hauteur de l'installation et le plan (x, y) est un plan horizontal pour l'installation.

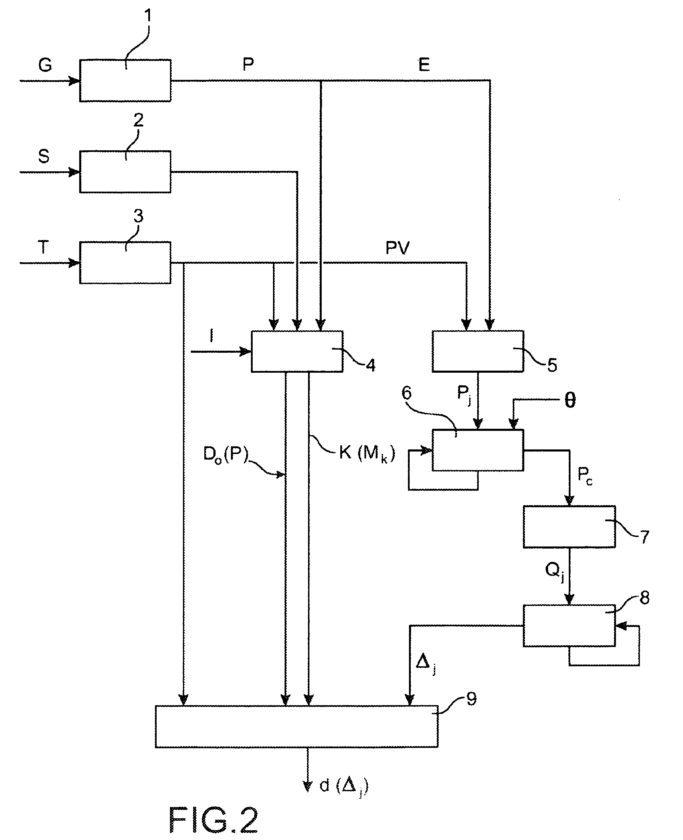

La figure 2 représente un synoptique des différentes étapes du procédé de détermination de dose de l'invention (étapes 1-9).

Le procédé de l'invention commence par trois étapes de lecture de données, à savoir une étape 1 de lecture de données de géométrie de l'installation, une étape 2 de lecture de données de source et une étape 3 de lecture de données de tracé. L'ordre dans lequel les étapes de lecture 1 à 3 sont effectuées est indifférent, ces trois étapes pouvant être effectuées simultanément.

Les données géométriques de l'installation G lues à l'étape 1 sont représentatives de la configuration volumique du bâtiment (les différentes pièces du bâtiment, l'enveloppe du bâtiment) et de la configuration géométrique des écrans de protection qui sont présents dans le bâtiment.

Les données de source S lues à l'étape 2 sont des données relatives à la source qui émet les rayonnements. Elles sont constituées du nombre de fissions qui se produisent, en fonction du temps, au niveau de l'accident, de données géométriques qui décrivent la géométrie de la cuve dans laquelle l'accident s'est produit (source ponctuelle ou source volumique) et de données de milieu qui caractérisent le milieu dans lequel s'est produit l'accident (milieu liquide, poudre, métal). Ces données sont obtenues d'une part à partir de mesures de rayonnement délivrées par les capteurs qui ont détecté l'accident de criticité et, d'autre part, à partir d'informations pré-enregistrées relatives aux différents produits présents dans l'installation.

Les données de tracé T comprennent :

-   des données de seuil qui définissent des intervalles de dose prédéterminés dans lesquels les doses calculées seront réparties, et
-   des données géométriques relatives aux points de l'installation où il est souhaité que les doses soient calculées (plan(s) de visualisation, zone(s) particulière(s) ou point(s) particulier(s) de l'installation).

Les étapes de lecture 1, 2 et 3 sont suivies d'une étape 4 d'évaluation des coefficients d'atténuation $K(M_k)$ (k=1, 2, ..., n) des différents matériaux $M_k$ (k=1, 2, ..., n) qui composent l'installation et de données théoriques $D_o(P)$ qui représentent les doses de rayonnement qui seraient présentes, en l'absence de toute paroi ou écran, en différents points P de l'installation. L'étape de calcul 4 des coefficients $K(M_k)$ et des données $D_o(P)$ est effectuée à partir des données G et S, de données T et de données internes I qui comprennent un modèle mathématique de coefficient d'atténuation pour chaque type de matériau. De façon préférentielle, un coefficient d'atténuation se présente sous la forme d'une équation polynomiale. A titre d'exemple non limitatif, un coefficient d'atténuation **$K(M_k)$** d'un matériau **$M_k$** traversé par un rayonnement s'écrit sous la forme :

$$K(M_k) = aX + bY + cXY + dX^2 + eY^2 + fZ + gW$$

Les coefficients a, b, c, d, e, f et g sont des paramètres connus de valeur fixe qui sont caractéristiques du matériau **$M_k$** dont on cherche à évaluer le coefficient d'atténuation. Les grandeurs X, Y, Z sont des variables caractéristiques de la source de rayonnement et la grandeur W est une variable qui représente l'épaisseur du matériau **$M_k$** traversé (W sera précisée ultérieurement). De façon plus précise, la variable X dépend du type de source (liquide, poudre, métal), la variable Y dépend du volume de la source et la variable Z dépend du temps qui s'est écoulé entre l'accident et le moment où le coefficient est déterminé. Les coefficients a, b, c, d, e, f et g sont des données qui appartiennent à l'ensemble de données I mentionné précédemment. Les données X, Y, Z sont des données qui appartiennent à l'ensemble de données S et la donnée W est calculée à partir des données géométriques G et de données de tracé T.

Pour un type de source donnée, la quantité $aX + bY + cXY + dX^2 + eY^2 + fZ$ est un terme constant $K_o$. Ainsi, la grandeur **$K(M_k)$** s'exprime-t-elle sous la forme d'une fonction de la seule variable W, à savoir :

$$K(M_k) = g \times W + K_0$$

De façon plus générale, les données internes I comprennent, outre les équations mathématiques des coefficients d'atténuation et les coefficients a, b, c, d, e, f, g, les données suivantes :

- les unités dans lesquelles on souhaite que les doses soient calculées (dose dans l'air Gy ou équivalent de dose Sv), et
- les conditions du calcul des coefficients d'atténuation (coefficients de correction de distance entre la source et les points de calcul).

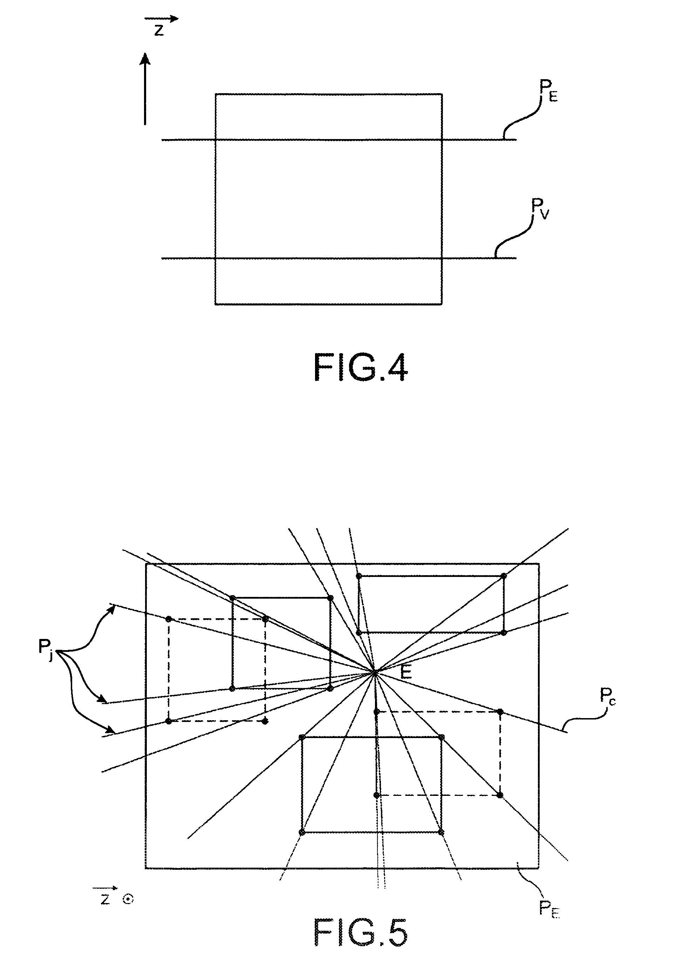

En parallèle à l'étape de calcul 4 sont effectuées quatre étapes de calcul élémentaires 5, 6, 7 et 8. L'étape 5 est une étape de détermination de plans caractéristiques utiles pour le calcul de dose. A titre d'exemple non limitatif, un ensemble de plans caractéristiques $P_j$ est représenté en figure 5. La figure 5 représente une vue en coupe de l'installation selon le plan horizontal $P_E$ qui contient le point E auquel est assimilée la source émettrice des rayonnements nocifs. Les plans caractéristiques sont construits entre le plan $P_E$ et un plan de visualisation $P_v$. Le plan de visualisation Pu est un plan parallèle au plan $P_E$ dans lequel les doses sont calculées (cf. figure 4). Le plan de visualisation $P_v$ est une donnée fixée par les données de tracé T. Chaque plan caractéristique $P_j$ est un plan vertical, c'est-à-dire un plan perpendiculaire aux plans horizontaux $P_E$ et $P_v$, qui contient le point E auquel est assimilée la source émettrice des rayonnements nocifs et au moins une arête de jonction entre deux parois verticales comprises entre les plans $P_E$ et $P_v$. L'ensemble de tous les plans qu'il est possible de construire selon la règle précisée ci-dessus constitue les plans caractéristiques de l'invention. En conséquence, toutes les arêtes de toutes les pièces comprises entre $P_E$ et $P_v$ et qui sont perpendiculaires aux plans $P_E$ et $P_v$ sont concernées. L'ensemble des plans caractéristiques est sélectionné à partir des données géométriques G.

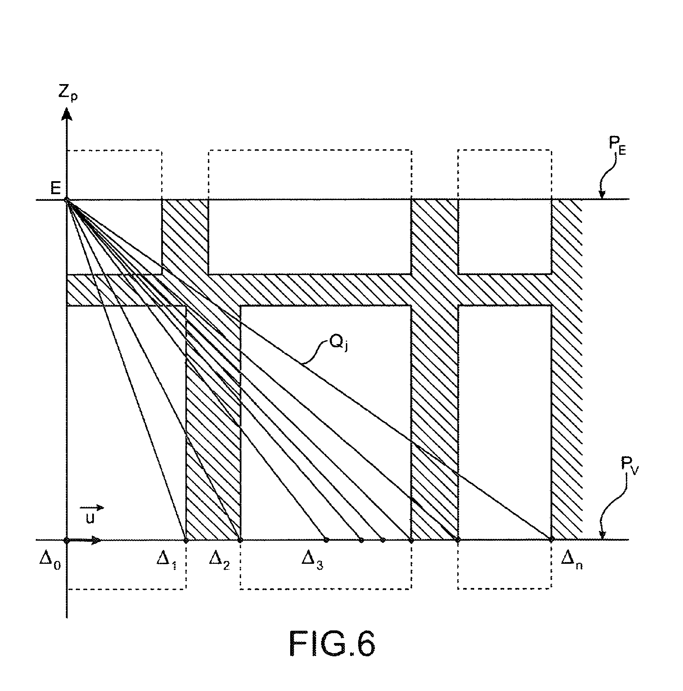

A l'étape 6 du procédé de l'invention, un balayage est ensuite effectué entre les plans caractéristiques $P_j$ afin de déterminer différents plans de calcul $P_c$. Les plans de calculs $P_c$ sont alors obtenus par rotation, avec un pas angulaire θ, des plans caractéristiques $P_j$ autour d'un axe $Z_p$ perpendiculaire aux plan $P_E$ et $P_v$ et passant par le point source E. Chaque plan de calcul $P_C$ est un plan dans lequel un calcul de dose est effectué, selon une direction donnée, comme cela va maintenant être décrit, à titre d'exemple non limitatif, dans un plan de calcul particulier, en référence à la figure 6.

A l'étape 6 de détermination des plans de calcul succède une étape 7 de détermination de droites caractéristiques $Q_j$ dans chaque plan de calcul. Pour un plan de calcul donné, une droite caractéristique $Q_j$ passe par le point source E et par au moins un point situé à la jonction de deux arêtes situées dans le plan de calcul. Toutes les droites qu'il est possible de construire selon la règle précisée ci-dessus constituent l'ensemble des droites caractéristiques Q de L'invention pour le plan de calcul considéré. Par construction, un plan de calcul F se divise en deux demi-plans symétriques l'un de l'autre par rapport à l'axe vertical $Z_p$. L'ensemble des droites caractéristiques relatives à un plan de calcul se divise donc en deux demi-ensembles de droites caractéristiques. La figure 6 illustre, à titre d'exemple non limitatif, un demi-ensemble de droites caractéristiques pour le plan de calcul $P_c$ de la figure 5. Le demi-plan de calcul coupe le plan de visualisation $P_v$ selon une droite D de vecteur unitaire $\overline{u}$. Un ensemble de points caractéristiques $\Delta_j$ appartenant à la droite D est alors déterminé (étape 8 du procédé de l'invention). Un point caractéristique $\Delta_j$ est obtenu par l'intersection d'une droite caractéristique $Q_j$ et de la droite D. La figure 6 représente, à titre d'exemple, une succession de points caractéristiques $\Delta_0$, $\Delta_1$, $\Delta_2$, ......, $\Delta_n$. Les points caractéristiques $\Delta_j$ ont une position géométrique connue dans l'installation. La structure de l'installation entre le point source E et chacun des points $\Delta_j$ est également connue (cf. figure 6). Ainsi, à partir des données calculées précédemment $D_0(P)$ et $K(M_k)$, de la position connue des points $\Delta_j$ par rapport à la source émettrice E et de la structure connue de l'installation entre la source E et les points $\Delta_j$, la dose de rayonnement $d(\Delta_j)$ présente en chaque point $\Delta_j$ peut-elle être calculée (étape 9 du procédé de l'invention).

La droite de calcul D est constituée de zones à l'air libre et de zones de mur ou d'écran. Le calcul des doses ne présente de réel intérêt que dans les zones à l'air libre. Le calcul des doses $d(\Delta_j)$ n'est donc effectué, préférentiellement, que pour les points $\Delta_j$ situés dans les zones à l'air libre.

Le calcul de la dose en un point $\Delta_j$ est obtenu par l'équation suivante :

$$d(\Delta_j) = D_0(P) \times C_d \times \sum_k K(M_k)$$

- $D_0(P)$ est la dose calculée, en l'absence de murs et d'écrans, en un point arbitraire prédéterminé P situé, sur le trajet du rayonnement, à une distance $l_0$ du point source E (dans le cas d'une source volumique, le point E est le centre du volume de la source),
- $C_d$ est un coefficient de correction de distance tel que:

$$C_d = \frac{l_0^2}{l^2},$$

où $l_0$ est la distance mentionnée précédemment et $l$ la distance du point source E au point $\Delta_j$, et

- **K(M$_k$)** est le coefficient d'atténuation du matériau **M$_k$** mentionné ci-dessus.

Le coefficient d'atténuation **K(M$_k$)** va maintenant être précisé. Comme cela a été mentionné précédemment, le coefficient d'atténuation d'un matériau **M$_k$** traversé par le rayonnement s'écrit :

$$K(M_k) = g \times W + K_0$$

où la grandeur W représente la distance parcourue par le rayonnement au travers du matériau $M_k$. De façon préférentielle, la grandeur W est définie en fonction de l'angle $\alpha$ que fait la direction du rayonnement qui traverse le mur ou l'écran de matériau $M_k$ avec la normale au plan de ce mur ou de cet écran :

- Pour un angle $\alpha$ compris entre 0° et une valeur limite prédéterminée $\alpha_{lim}$ (0< $\alpha_{lim}$< $\pi$/2), W est l'épaisseur réelle de matériau traversé, et
- Pour un angle $\alpha$ compris entre la valeur limite prédéterminée $\alpha_{lim}$ et n/2, W est la valeur $W_{lim}$ de l'épaisseur du mur ou de l'écran qui correspond à l'angle $\alpha_{lim}$.

La quantité $a_{lim}$ est choisie de manière à ne pas sous-estimer la dose $d(\Delta_j)$ pour les angles importants. Cette quantité $\alpha_{lim}$ varie avec le type de rayonnement.

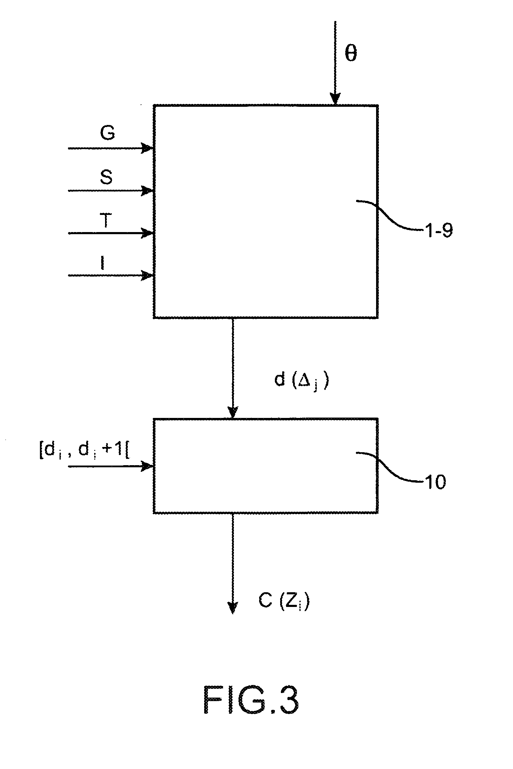

La figure 3 représente un synoptique du procédé de détermination de courbes isodoses de l'invention. Le procédé de détermination de courbes isodoses reprend l'ensemble des étapes 1-9 décrites ci-dessus et une étape 10 supplémentaire de répartition des doses calculées dans des intervalles de doses de valeurs prédéterminées.

Un exemple d'une telle répartition va maintenant être décrit, dans lequel les doses $d(\Delta_j)$ sont réparties dans n intervalles de doses [di, di+1[ (i=1,2,..., n).

La répartition des doses calculées dans les différents intervalles de dose s'effectue ainsi :

- si les doses $d(\Delta_j)$ et $d(\Delta_{j+1})$ calculées pour deux points caractéristiques successifs $\Delta_j$ et $\Delta_{j+1}$ d'une même zone à l'air libre appartiennent à un même intervalle [*di,di*+1[, alors une même zone Z est affectée entre ces points ;
- sinon, la dose $d((\Delta_j+\Delta_{j+1})/2)$ au point milieu $(\Delta_j +\Delta_{j+1})/2$ est calculée et il est recherché, par dichotomie, un ou des points $\Delta_k$ dont la dose $d(\Delta_k)$ est une limite d'intervalle de doses, une même zone d'appartenance étant affectée entre deux points consécutifs appartenants au même intervalle de doses.

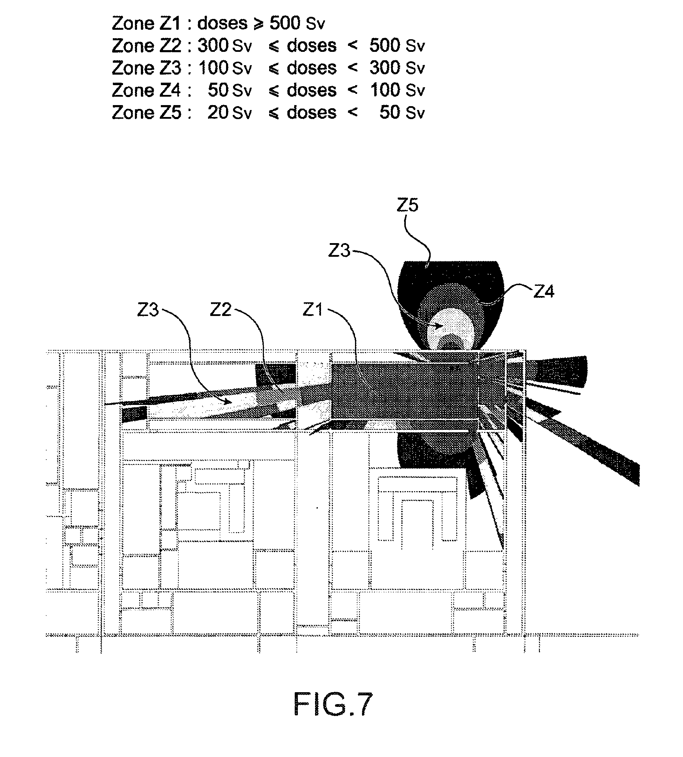

Il est alors possible d'obtenir, pour une même droite de calcul D, une courbe d'isodoses $C(Z_i)$ en fonction de différentes zones $Z_i$ (étape 10 du procédé). Obtenues pour l'ensemble des droites de calcul, c'est-à-dire pour l'ensemble des plans de calcul, les courbes isodoses $C(Z_i)$ constituent une surface d'isodoses dans l'ensemble du plan de visualisation $P_V$. A titre d'exemple non limitatif, la figure 7 illustre une répartition des doses calculées dans cinq zones Z1-Z5.

Dans le cas particulier où le plan de visualisation est le plan horizontal $P_E$ qui contient le point source E, tous les murs et écrans sont traversés perpendiculairement à leur surface ($\alpha$ = 0). Les valeurs des coefficients d'atténuation sont alors des valeurs constantes K. Les calculs se trouvent ainsi être très avantageusement simplifiés.

Si les doses $d(\Delta_j)$ et $d(\Delta_{j+1})$ n'appartiennent pas au même intervalle [di, di+1], la distance 1 qui sépare le point source E d'un point $\Delta_j$ où la dose de rayonnement $d(\Delta_j)$ correspond à une limite d'intervalle s'exprime simplement par l'équation :

$$l = l_0 \times \sqrt{\frac{D_0(P)}{d_k} \times \sum_k K(M_k)}$$

## Revendications

1. Procédé de détermination de dose de rayonnement émis, de façon réelle ou simulée, par une source de matière fissile dans une installation, comprenant les étapes suivantes:

    - détermination du nombre de fissions qui se produisent, en fonction du temps, dans la matière fissile de la source,

- détermination de coefficients d'atténuation de matériaux qui constituent les parois verticales et les planchers de l'installation et plus généralement, tout écran susceptible d'être placé sur la trajectoire du rayonnement émis,
- détermination, à partir de données géométriques descriptives de l'installation, entre un plan source ($P_E$) sensiblement perpendiculaire aux parois verticales de l'installation et qui contient un point source (E) représentatif de la source de rayonnement et un plan de visualisation ($P_V$) parallèle au plan source, d'un ensemble de plans caractéristiques ($P_j$) perpendiculaires au plan source et contenant, chacun, le point source (E) et au moins une arête de jonction entre deux parois verticales de l'installation ;
- balayage angulaire ($\theta$) des plans caractéristiques autour d'un axe ($Z_p$) perpendiculaire au plan source et passant par le point source (E) pour définir au moins un plan de calcul ($P_C$) ;
- détermination, pour le plan de calcul, d'un ensemble de droites caractéristiques (Q-), chaque droite caractéristique passant par le point source (E) et par au moins un point situé à la jonction de deux arêtes de jonction ;
- sur une droite de calcul (D) située à l'intersection du plan de visualisation et du plan de calcul, détermination de positions de points d'intersection entre la droite de calcul et les droites caractéristiques ;
- parmi les points d'intersection présents sur la droite de calcul, sélection des points d'intersection $\Delta_j$ situés dans des zones à l'air libre de l'installation ;
- calcul de la dose de rayonnement d($\Delta_j$) présente en chaque point $\Delta_j$, à partir du nombre de fissions en fonction du temps, d'une distance qui sépare le point source (E) du point $\Delta_j$ et des coefficients d'atténuation des matériaux constitutifs des parois verticales et/ou des planchers et/ou de tout écran qui séparent le point source (E) du point $\Delta_j$.

**2.** Procédé de détermination de courbes isodoses d'un rayonnement émis, de façon réelle ou simulée, par une source de matière fissile dans une installation, **caractérisé en ce qu'**il comprend successivement :

- un procédé de détermination de doses selon la revendication 1, et
- une comparaison des doses d($\Delta_j$) déterminées par le procédé de la revendication 1 avec des intervalles de doses prédéterminés de telle sorte que :

- si deux doses calculées d($\Delta_j$) et d($\Delta_{j+1}$) pour deux points d'intersection sélectionnes consécutifs $\Delta_j$ et $\Delta_{j+1}$ appartiennent à un même intervalle de doses, une même zone d'appartenance ($Z_i$) est affectée entre les deux points calculés ; et
- sinon, une dose de rayonnement d(($\Delta_j+\Delta_{j+1}$)/2) est calculée au point milieu situé entre les deux points consécutifs $\Delta_j$ et $\Delta_{j+i}$ et il est recherché, par dichotomie, un ou des points $\Delta_k$ dont la dose d($\Delta_k$) est une limite d'intervalle de doses, une même zone d'appartenance étant affectée entre deux points consécutifs appartenant au même intervalle de doses,

- une formation de la courbe isodose le long de la droite de calcul, en fonction des zones d'appartenance affectées aux doses de rayonnement calculées.

**3.** Procédé selon la revendication 2, dans lequel le balayage angulaire est effectué sur 360 degrés de telle sorte qu'un ensemble de courbes isodoses établies le long d'un ensemble de droites de calcul sont rassemblées pour constituer une représentation des isodoses dans l'ensemble du plan de visualisation.

**4.** Procédé selon l'une quelconque des revendications 1 à 3, dans lequel la dose de rayonnement présente au point d'intersection sélectionné est donnée par l'équation :

$$d\left(\Delta_j\right) = D_0(P) \times C_d \times \sum_k K(M_k) \,,$$

où

- $D_0(P)$ est la dose calculée, en l'absence de tout écran et d'écrans, en un point arbitraire prédéterminé (P) situé, sur le trajet du rayonnement qui se propage entre le point source (E) et le point $\Delta_j$, à une distance $l_0$ du point source (E),
- $C_d$ est un coefficient de correction de distance tel que :

$$C_d = \frac{l_0^2}{l^2} \, ,$$

où $l_0$ est la distance mentionnée précédemment et l la distance du point source (E) au point $\Delta_j$, et
- **K(M$_k$)** est le coefficient d'atténuation calculé d'un matériau **M$_k$** traversé par un rayonnement qui se propage entre le point source (E) et le point $\Delta_j$.

5. Procédé selon la revendication 4, dans lequel le coefficient d'atténuation **K(M$_k$)** est donné par la formule :

$$K(M_k) = g \times W + K_0 \, ,$$

où

- W est une grandeur qui représente l'épaisseur traversée du matériau **M$_k$**,
- g est un coefficient connu caractéristique du matériau **M$_k$**,
- $K_0$ est un terme connu qui dépend de la source de rayonnement et du matériau **M$_k$**.

6. Procédé selon la revendication 5, dans lequel la grandeur W est définie en fonction de l'angle $\alpha$ que fait la direction du rayonnement avec la normale à la paroi verticale de matériau **M$_k$** de telle sorte que :

- pour un angle compris entre 0° et une valeur limite prédéterminée $\alpha_{lim}$ ($0 < \alpha_{lim} < \pi/2$), W est l'épaisseur réelle de matériau traversé, et
- pour un angle $\alpha$ compris entre la valeur limite prédéterminée $\alpha_{lim}$ et n/2, W est l'épaisseur de matériau traversé d'un rayonnement dont la direction avec la normale à la paroi de verticale est l'angle $\alpha_{lim}$.

7. Procédé selon l'une quelconque des revendications précédentes, dans lequel le rayonnement émis est un rayonnement gamma ou une émission de neutrons ou une émission de particules alpha.

**Claims**

1. A method for determining a radiation dose emitted in a real or simulated way by a source of fissile material in an installation, the method comprising the following steps:

- determining the number of fissions which occur, versus time, in the fissile material of the source,
- determining attenuation coefficients of the materials which form the vertical walls and the floors of the installation and more generally, of any screen which may be placed on the trajectory of the emitted radiation,
- determining from descriptive geometrical data of the installation between a source plane ($P_E$) substantially perpendicular to the vertical walls of the installation and which contains a point source (E) representative of the radiation source and a viewing plane ($P_v$) parallel to the source plane, a set of characteristic planes ($P_j$) perpendicular to the source plane and each containing the point source (E) and at least one junction edge between two vertical walls of the installation;
- angularly scanning ($\theta$) the characteristic planes around an axis ($Z_p$) perpendicular to the source plane and passing through the point source (E) in order to define at least one calculation plane ($P_C$);
- determining for the calculation plane, a set of characteristic lines ($Q_j$), each characteristic line passing through the point source (E) and through at least one point located at the junction of two junction edges;
- on a calculation line (D) located at the intersection of the viewing plane and of the calculation plane, determining positions of intersection points between the calculation line and the characteristic lines;
- among the intersection points present on the calculation line, selecting intersection points $\Delta_j$ located in open air zones of the installation;
- calculating the radiation dose d($\Delta_j$) present in each point $\Delta_j$, from the number of fissions versus time, from a distance which separates the point source (E) from the point $\Delta_j$ and from attenuation coefficients of the constitutive materials of the verticals walls and/or floors and/or of any screen separating the point source (E) from the point $\Delta_j$.

2. A method for determining isodose curves of radiation emitted in a real or simulated way, by a source of fissile material in an installation, **characterized in that** it successively comprises:

- a method for determining doses according to claim 1, and
- a comparison of the doses $d(\Delta_j)$ determined by the method of claim 1 with predetermined dose intervals such that:

- if two calculated doses $d(\Delta_j)$ and $d(\Delta_{j+1})$ for two consecutive selected intersection points $\Delta_j$ and $\Delta_{j+1}$ belong to a same interval of doses, a same appurtenance zone $(Z_i)$ is allotted between the two calculated points; and
- otherwise, a radiation dose $d((\Delta_j+\Delta_{j+1}/2)$ is calculated at the middle point located between the two consecutive points $\Delta_j$ and $\Delta_{j+1}$ and one or more points $\Delta_k$ are sought by dichotomy, for which the dose $d(\Delta_k)$ is a dose interval limit, a same appurtenance zone being allotted between both consecutive points belonging to the same dose interval,

- a formation of the isodose curve along the calculation line, as a function of the appurtenance zones allotted to the calculated radiation doses.

3. The method according to claim 2, wherein the angular scan is carried out over 360 degrees so that a set of isodose curves established along a set of calculation lines are grouped in order to form a representation of the isodoses in the whole of the viewing plane.

4. The method according to any claim 1 to 3, wherein the radiation dose present at the selected intersection point is given by the equation:

$$d\left(\Delta_j\right) = D_0\left(P\right) \times C_d \times \sum_k K\left(M_k\right),$$

wherein

- $D_0(P)$ is the calculated dose, in the absence of any screen and of screens, in a predetermined arbitrary point (P) located on the path of the radiation which propagates between the point source (E) and the point $\Delta_j$ at a distance $l_0$ from the point source (E),
- $C_d$ is a distance correction coefficient such that:

$$C_d = \frac{l_0^2}{l^2},$$

wherein $l_0$ is the distance mentioned earlier and $l$ is the distance from the point source (E) to the point $\Delta_j$, and
- $\mathbf{K(M_k)}$ is the calculated attenuation coefficient of a material $\mathbf{M_k}$ crossed by radiation which propagates between the point source (E) and the point $\Delta_j$.

5. The method according to claim 4, wherein the attenuation coefficient $\mathbf{K(M_k)}$ is given by the formula:

$$K(M_k) = g \times W + K_0,$$

wherein

- W is a quantity which represents the crossed thickness of the material $\mathbf{M_k}$,
- g is a known coefficient characteristic of the material $\mathbf{M_k}$,
- $K_0$ is a known term which depends on the radiation source and on the material $\mathbf{M_k}$.

6. The method according to claim 5, wherein the quantity W is defined as a function of the angle $\alpha$ formed by the direction of the radiation with the normal to the vertical wall of material $\mathbf{M_k}$ so that:

    - for an angle $\alpha$ comprised between 0° and a predetermined limiting value $\alpha_{lim}$ ($0<\alpha_{lim}<\pi/2$), W is the actual thickness of the crossed material, and
    - for an angle $\alpha$ comprised between the predetermined limiting value $\alpha_{lim}$ and n/2, W is the thickness of the material crossed by radiation, the direction of which forms the angle $\alpha_{lim}$ with the normal to the vertical wall.

7. The method according to any preceding claim, wherein the emitted radiation is gamma radiation or neutron emission or alpha particle emission.


**Patentansprüche**

1. Verfahren zur Dosisbestimmung von Strahlung, die in realer oder simulierter Weise von einer Quelle spaltbaren Materials in einer Anlage emittiert wird, wobei das Verfahren die folgenden Stufen bzw. Etappen umfasst;

    - Bestimmen der Zahl von Spaltvorgängen, die in Abhängigkeit von der Zeit in dem spaltbaren Material der Quelle auftreten,
    - Bestimmen von Schwächungskoeffizienten von Materialien, welche die vertikalen Wandungen und die Böden und Decken der Anlage und, allgemeiner, jede Abschirmung bilden, die auf der Bahn der emittierten Strahlung angeordnet werden kann,
    - zwischen einer Quell- Ebenen ($P_E$), die senkrecht zu den vertikalen Wandungen der Anlage ist und einen für die Strahlungsquelle repräsentativen Quellpunkt (E) enthält, und einer zu der Quell-Ebene parallelen Visualisierungs- bzw. Sichtdarstellungsebene ($P_V$) wird
    - ausgehend von bzw. auf der Grundlage von die Anlage beschreibenden geometrischen Daten bzw. Gegebenen
    - eine Gruppe von charakteristischen Ebenen ($P_j$) bestimmt, die senkrecht zur der Quell-Ebene sind und jede jeweils den Quellpunkt (E) und wenigstens eine Verbindungs-bzw. Stoßkante zwischen zwei vertikalen Wandungen der Anlage enthalten;
    - winkelmäßige bzw. Schwenkabtastung (q) der charakteristischen Ebenen um eine Achse (Zp), die senkrecht zur Quell-Ebene ist und den Quell-Punkt (E) enthält, zur Definition wenigstens einer Berechnungsebene ($P_c$);
    - Bestimmen, für die Berechnungsebene, einer Gruppe von charakteristischen Geraden ($Q_j$) deren jede jeweils durch den Quellpunkt (E) und durch wenigstens einen auf der Verbindung von zwei Verbindungs- bzw. Stoßkanten gelegenen Punkt verläuft;
    - auf einer im Schnitt der Visualisierungs- bzw. Sichtdarstellungsebene und der Berechnungsebene gelegenen Berechnungsgeraden (D) werden die Lagen von Schnittpunkten zwischen der Berechnungsgeraden und den charakteristischen Geraden bestimmt;
    - unter den auf der Berechnungsgeraden vorliegenden Schnittpunkten werden Schnittpunkte $\Delta_j$ ausgewählt, die in Zonen freier Luft der Anlage liegen;
    - Berechnen der jeweils in jedem Punkt $\Delta_j$ vorliegenden Strahlungsdosis, auf der Grundlage der Zahl von Spaltungsvorgängen in Abhängigkeit von der Zeit, einer den Quellpunkt (E) von dem Punkt $\Delta_j$ trennenden Entfernung und der Schwächungskoeffiizienien der die vertikalen Wandungen und/oder die Böden und/oder jegliche den Quellpunkt (E) von dem Punkt $\Delta_j$ trennende Abschirmung bildenden Materialien.

2. Verfahren zum Bestimmen von Isodosis-Kurven einer Strahlung, die in reeller oder simulierter Weise durch eine Quelle spaltbaren Materials in einer Anlage emittiert wird, **dadurch gekennzeichnet, daß** das Verfahren in Aufeinanderfolge umfaßt:

    - ein Verfahren zur Dosisbestimmung nach Anspruch 1, und
    - einen Vergleich der nach dem Verfahren gemäß Anspruch 1 bestimmten Dosen d ($\Delta_j$) mit Dosisintervallen, die so vorbestimmt sind, dass
    - wenn zwei berechnete Dosen d ($\Delta_j$) und d ($\Delta_j$+1) für zwei ausgewählte aufeinanderfolgende Schnittpunkte $\Delta_j$ und $\Delta_j$+1 zu ein und demselben Dosisintervall gehören , ein und dieselbe Zugehörigkeitszone ($Z_i$) zwischen den beiden berechneten Punkten zugewiesen wird; und
    - wenn dies nicht der Fall ist, eine Strahlungsdosis d (($\Delta_j+\Delta_j$+1) /2) für den zwischen den beiden aufeinanderfolgenden Punkten $\Delta_j$ und $\Delta_j$+1 gelegenen mittleren Punkt berechnet wird und mittels Dichotomie nach einem Punkt oder Punkten k gesucht, dessen bzw. deren Dosis d ($\Delta_k$) ein Grenzdosisintervall ist, wobei ein und dieselbe Zugelhörigkeitszone zwischen zwei aufeinander folgenden Punkten zugewiesen wird, die zu demselben Dosisintervall gehören,
- eine Formation der Isodosis-Kurve längs der Berechnungsgeraden, als Funktion der den berechneten Strahlungsdosen zugewiesenen Zugehörigkeitszonen.

3. Verfahren nach Anspruch 2, bei welchem die winkelmäßige bzw. Schwenkabtastung um 360 Grad erfolgt derart, daß eine Gruppe von isodosis-Kurven, die längs einer Gruppe von Berechnungsgeraden erhalten wurden, gesammelt werden zur Bildung einer Wiedergabe der Isodosen im Ganzen der Visualisierungs- bzw. Sichtdarstellungs-Ebene.

4. Verfahren nach einem beliebigen der Ansprüche 1 bis 3, bei welchem die im ausgewählten Schnitt vorliegende Strahlungsdosis gegeben ist durch die Gleichung:

$$d\,(\Delta_j) = D_0\,(P) \times C_d \times S_k\,K\,(M_k),$$

worin bedeuten

- $D_0\,(P)$ die berechnete Dosis, in Abwesenheit jeglicher Abschirmung(en), in einem vorbestimmten willkürlichen Punkt (P) auf der Bahn der sich zwischen dem Quellpunkt (E) und dem Punkt $\Delta_j$ ausbreitenden Strahlung, in einem Abstand $l_0$ von dem Quellpunkt (E),
- $C_d$ einen Entfernungskorrektur-Koeffizienten der Art:

$$C_d = \frac{l_0^2}{l^2},$$

worin $l_0$ die zuvor erwähnte Entfernung und $l$ den Abstand des Quellpunkts (E) und des Punkts $\Delta_j$ bedeuten, und
- $K(M_k)$ den berechneten Schwächungskoeffizienten eines Materials $M_k$, das von einer sich zwischen dem Quellpunkt (E) und dem Punkt $\Delta_j$ ausbreitenden Strahlung durchsetzt wird.

5. Verfahren nach Anspruch 4, bei welchem der Schwächungs-Koeffizient $K(M_k)$ gegeben ist durch die Formel:

$$K\,(M_k) = g \times W + K_0,$$

worin bedeuten

- W eine Größe , welche die durchstrahlte Materialstärke des Materials $M_k$ darstellt ,
- g einen bekannten charakteristischen Koeffizienten des Materials $M_k$,
- $K_0$ einen bekannten Term, der von der Strahlungsquelle und von dem Material $M_k$ abhängt.

6. Verfahren nach Anspruch 5, bei welchem die Größe W in Abhängigkeit von dem Winkel $\alpha$, welchen die Richtung der Strahlung mit der Normalen auf der vertikalen Wandung aus dem Material $M_k$ bildet, so definiert ist, dass:

- für einen Winkel $\alpha$ zwischen 0° und einem vorgegebenen Grenzwert $\alpha_{lim}$ gemäß der Beziehung $(0 < \alpha_{lim} < \pi/2)$ die Größe W die reale durchstrahlte Materialstärke ist, und
- für einen Winkel $\alpha_{lim}$ Bereich zwischen dem vorgegebenen Grenzwert $\alpha_{lim}$ und $\pi/2$ die Größe W die Materialstärke ist, welche von einer Strahlung durchsetzt wird, deren Richtung mit der Normalen auf der vertikalen Wandung den Winkel $\alpha_{lim}$ bildet.

7. Verfahren nach einem beliebigen der vorhergehenden Ansprüche, bei welchem die emittierte Strahlung eine Strahlung, oder eine Neutronenemission oder eine Teilchen-Emission ist.

FIG.1

FIG.2

FIG.3

$\vec{z}$

$P_E$

$P_V$

## FIG.4

$P_j$

E

$P_c$

$\vec{z}$ ⊙

$P_E$

## FIG.5

FIG.6

Zone Z1 : doses $\geqslant$ 500 Sv
Zone Z2 : 300 Sv $\leqslant$ doses < 500 Sv
Zone Z3 : 100 Sv $\leqslant$ doses < 300 Sv
Zone Z4 :  50 Sv $\leqslant$ doses < 100 Sv
Zone Z5 :  20 Sv $\leqslant$ doses <  50 Sv

FIG.7